# EUROPEAN PATENT SPECIFICATION

(11) **EP 1 697 076 B1**
(45) Date of publication and mention of the grant of the patent: **13.06.2012**
(21) Application number: 04815102.1
(22) Date of filing: 21.12.2004
(51) Int. Cl.: B23D 31/00

(54) **METHOD AND APPARATUS FOR FRACTURING SEAL RINGS**
VERFAHREN UND VORRICHTUNG ZUM ZERBRECHEN VON DICHTUNGSRINGEN
PROCEDE ET APPAREIL PERMETTANT DE ROMPRE DES BAGUES D'ETANCHEITE

(30) Priority: 22.12.2003 US 531711 P; 16.12.2004 US 14008
(43) Date of publication of application: 06.09.2006
(73) Proprietor: E.I. DU PONT DE NEMOURS AND COMPANY, Wilmington, DE 19898 (US)
(72) Inventor: EDWARDS, Mark, Stephen, Hockessin, Delaware 19707 (US)
(74) Representative: Heinemann, Monica
(86) International application number: PCT/US2004/042985
(87) International publication number: WO 2005/063428

(56) References cited:
- CH-A- 345 206
- DE-A1- 3 120 655
- GB-A- 2 145 947
- US-A- 4 821 386
- US-A- 5 988 649

## Description

### FIELD OF THE INVENTION

The present invention relates to sealing rings. More particularly, the present invention relates to a method and apparatus for fracturing a seal ring to perform a sealing function, as per the preamble of claims 1 and 8. Such a method and apparatus are disclosed in DE 3120655 A1.

### BACKGROUND OF THE INVENTION

As is generally known, sealing rings have been made out of various materials, most commonly made from metals such as cast iron, flexible elastomers, and various polymers. Since the ring is placed in a groove of a piston or shaft, a gap must be placed in the non-elastic ring so as to facilitate application of and removal of from the piston or shaft. Some applications for these sealing rings are compressors, pumps, automatic transmissions and power steering devices. The known methods for preparing gaps in these rings have been to machine in the case of metals and polymers and to cut in the case of flexible polymers. Both machining and cutting of such rings has been both tedious and labor intensive, resulting in higher part manufacturing costs.

The following disclosures may be relevant to various aspects of the present invention and may be briefly summarized as follows:
US 5,988,649 to Van Ryper et al. discloses a seal ring having a fracture line through its thickness to form opposing faces. The faces are rough and mesh together such that when the faces are forced into contact, the faces are then interlocked. The fracture line of the seal ring is made by a device that has a support means of two support pins and a pressing means of a third pin. The two support pins support the seal ring along the seal rings inner circumference at two places, which are spaced some distance apart, resulting in an unsupported region of the seal ring. The pressing means of the third pin is then applied tangentially at an unsupported region of the outer surface of the seal ring, substantially opposite and generally equidistant between the two places, sufficient to create the fracture line of the seal ring. This method of fracturing rings uses several parts, has the potential for extended change over time and may cause unwanted stress on the seal ring being fractured causing undesirable side affects such as secondary fractures.

It is desirable to have a simpler and more efficient method of fracturing a seal ring without sacrificing sealing quality. It is further desirable to reduce unwanted stress on the seal ring being fractured and to reduce extended change over time of the fracturing seal ring apparatus.

### SUMMARY OF THE INVENTION

Briefly stated, and in accordance with one aspect of the present invention, there is provided a process for fracturing a sealing ring comprising the features of claim 1.

Pursuant to another aspect of the present invention, there is provided an apparatus comprising the features of claims 8.

### BRIEF DESCRIPTION OF THE DRAWINGS

The invention will be more fully understood from the following detailed description, taken in connection with the accompanying drawings, in which:
Figure 1A is a schematic view of an embodiment of the present invention showing the seal ring in an apparatus using a circular recessed area for fracturing the seal ring.
Figure 1B is a schematic view of the embodiment of Figure 1A showing the fracturing pin tangentially contacting the seal ring in a circular recessed area in the present invention.
Figure 2 shows a side view of the fractured ring of the present invention with the top view showing the ring separated at the fracture and the second view showing the fractured ring closed.
Figure 3 is a cross-sectional view of the seal ring positioned within a radial groove of a cylindrical member to perform a sealing function when the cylindrical member is positioned within a bore of a housing.
Figure 4 is an enlarged view of an embodiment of the fracturing tip of Figure 1A.
Figure 5A is a schematic illustration of another embodiment of the present invention where the recessed area is angular or "V" shaped.
Figure 58 is a schematic view of the embodiment of Figure 5A of the present invention showing the fracturing pin tangentially contacting the ring in an angular or "V" shaped recessed area.

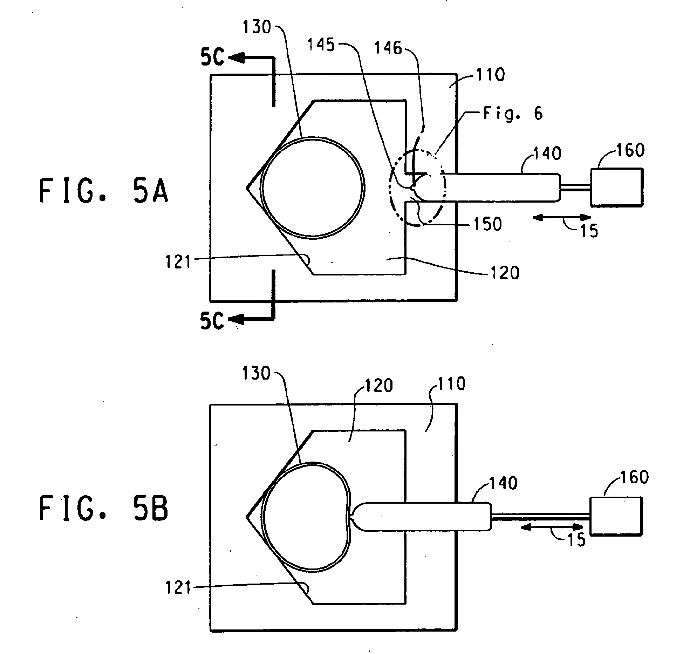

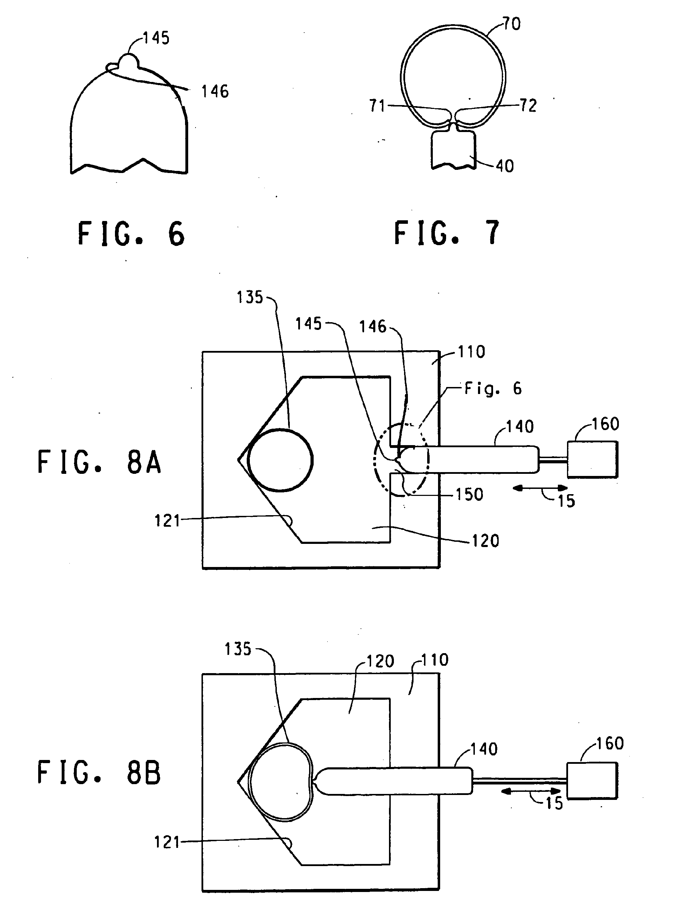

Figure 6 is an enlarged view of an alternate embodiment of the fracturing pin tip in Figure 5A.
Figure 7 is a schematic diagram of the deflection of the ring from the fracturing pin.

While the present invention will be described in connection with a preferred embodiment thereof, it will be understood that it is not intended to limit the invention to that embodiment On the contrary, it is intended to cover all alternatives, modifications, and equivalents as may be included within the scope of the invention as defined by the appended claims.

### DETAILED DESCRIPTION OF THE INVENTION

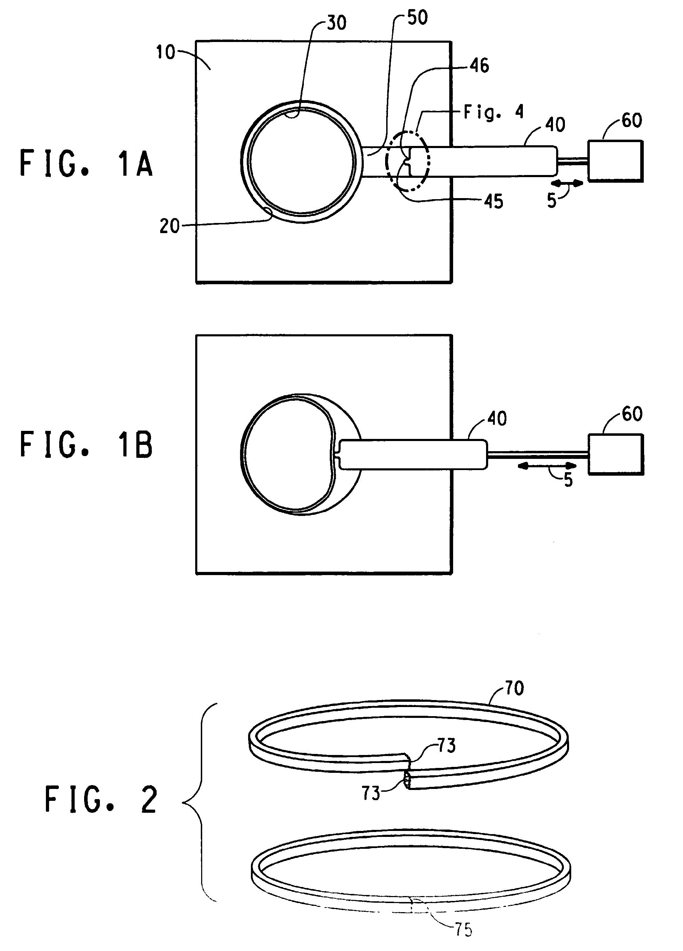

The present invention provides a method of fracturing a seal ring that is simple and efficient without decreasing the seal rings ability to prevent or minimize leakage. While it is desirable to eliminate leakage entirely, it is recognized that due to temperature or certain applications minimal leakage is acceptable in the present invention as will be apparent to those of skill in the art. The method of the present invention loosely holds a seal ring in the retaining pocket of a recessed member, which retaining pocket is preferably circular or round
FIG. 8A is a schematic illustration of the embodiment shown in FIG 5A with a seal ring of a different size.
FIG. 8B is a schematic view of the embodiment shown in FIG. 8A showing the fracturing pin contacting and compressing the seal ring.
(see Figure 1A or 1 B) or angular or "V" shaped (see Figure 5A or 5B) to somewhat restrict the outward deflection of the seal ring circumference when a localized point on the circumference of the seal ring is compressed inward by a fracturing pin. As this force builds or accumulates, the ring area in front of the pin is deflected sharply inward (due to the constraints of the pocket on the remainder of the ring) until the ring is over stressed and fractures at the tangential contact with the fracturing pin.

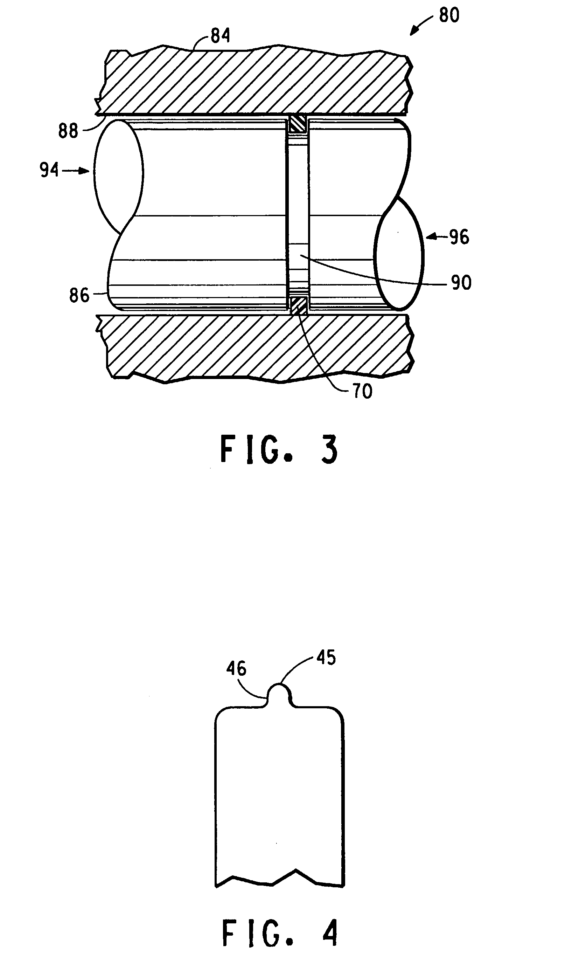

Reference is now made to the drawings for a detailed description of the present invention. Figure 1A discloses a schematic of the apparatus of the present invention. A plate 10 having a retaining pocket 20 loosely holds the sealing ring 30. The retaining pocket 20 is a recessed area in the plate 10. The recessed area is preferably in the shape of the ring 30 (i.e. circular or round in shape) or in an angular or "V" shape (see Figure 5A or 5B). A fracturing pin 40 is guided radially inward to the ring by any suitable means. One such means is a recessed channel 50 as shown by Figure 11. The fracturing pin 40 has a fracturing tip 45 supported by a support member 46. An enlarged view of the fracturing tip is shown in Figure 4. The sliding direction of the fracturing pin 40 for fracturing and retraction is shown by arrow 5. The fracturing pin 40 tangentially contacts the circumference of the sealing ring 30. A mechanism such as an air cylinder 60 is used to provide the fracturing pin with the compressive force to fracture the seal ring.

Reference is now made to Figure 5A, 5B, 8A and 8B that discloses an alternate embodiment of the recessed area in the plate for fracturing of the seal ring. Figure 5A discloses a schematic of the apparatus of the present invention. A plate 110 having a retaining pocket 120 that loosely holds the sealing ring 130. Figure 8A shows the same embodiment with a different size sealing ring 135. The retaining pocket 120 has an angular or "V" shape. The "V" shape enables rings of different sizes (e.g. 130, 135,...) to be used in the apparatus as they position themselves appropriately in the "V" shape as described below. The retaining pocket 120 is a recessed area in the plate 110. A fracturing pin 140 is guided by suitable means such as a recessed channel 150 as shown by Figures 5B and 8B. The fracturing pin 140 has a fracturing tip 145 supported by a support member 146. An enlarged view of the fracturing tip is shown in Figure 6. The sliding direction of the fracturing pin 140 for fracturing and retraction is shown by arrow 15. The fracturing pin 140 tangentially contacts the circumference of the sealing ring 130 or 135. A mechanism such as an air cylinder 160 is used to provide the fracturing pin with the compressive force sufficient to fracture the seal ring.

Reference is now made to Figure 2, which shows the fractured seal ring 70 that occurs from the method of the present invention. The fracture line 75 of the sealing ring 70 consists of opposing faces 73, which are perpendicular to the axis of the seal ring. That is, the fracture line essentially does not deviate at an angle to the radius. Additionally, the opposing faces 73 are rough, as naturally occurs by the fracture method of the present invention described above. With reference to Figure 3, when the seal ring is placed within the radial groove 90 of the cylindrical member 86, then placed within the bore 88 of the housing 84, the opposing faces are in or near contact with each other.

As is generally known to those of ordinary skill in the art, the seal ring becomes heated during the rotational or reciprocating movement of the cylindrical member, which causes the seal ring to thermally expand when the seal assembly is at operating conditions. For that reason, the opposing faces may not necessarily make contact until the operating conditions are reached. Along with temperature, fluid pressure is another operating condition, which affects the seal rings ability to perform the sealing function. With continuing reference to Figure 3, when operating pressure is achieved on the pressurized side 94 of the seal assembly 80, as described herein and the operating temperature is achieved, the opposing faces mesh and interlock, thereby closing the gap which was created for installation of the seal ring and whereby the gap does not become a point of leakage. It should be noted that due to the fact that the rough opposing faces mesh and interlock, a single seal ring is all that is required to perform the sealing function. In other words, more than one fractured seal rings, wherein the fracture lines are staggered in opposite directions, as has been common heretofore because of the inability of the gap to completely close, is not required to perform the sealing function. The fractured seal rings created by the method of the present invention can be used in a variety of applications including static, reciprocating and rotating applications to perform a sealing function. The sealing rings are used in applications where fluids in the form of liquid or gas are isolated, such that the fluid exerts pressure against the seal ring thereby creating a sealed surface.

Figure 3 shows a known application for a seal assembly 80 in which a seal ring made from the present invention is disclosed. The assembly 80 is made up of a housing 84 and a cylindrical member 86 movably positioned within a bore 88 of the housing 84. The cylindrical member 86 moves within the bore 88, in either a reciprocating or rotating mode. The cylindrical member 86 has a radial groove 90 for seating a seal ring 70, such that the cylindrical member is positioned within the housing, and the seal ring performs a sealing function.

As may be expected, undesirable leakage of fluids across the seal ring would be evidence that the seal assembly 80 is not functioning properly. As mentioned above, in some instances complete removal of leakage is not possible. Furthermore, there are instances where small and controlled leakage is preferred. For example, a controlled leakage may be used for lubrication or heat removal for a bearing or bushing on the non-pressured side such as in a transmission. When the seal ring is positioned within the seal assembly 80 and upon pressurization of the seal assembly a properly functioning seal ring 70 will prevent, or at least minimize, leakage of fluids. The cylindrical member 86 has a pressurized side upstream of the seal ring indicated generally at 94 and a non-pressurized side downstream of the seal ring indicated generally at 96. The seal ring 70 functions by isolating the pressurized side 86 from the non-pressurized side 96.

In the apparatus and method of the present invention, the edge or fracturing tip 45 of the fracturing pin 40 shown in Figures 1A and 1B can be sharper than the dowel or round pressing pin of the prior art (US Pat. No. 5,988,649) and not score the seal ring surface. In the present invention, the preferred fracturing pin tip or edge 45 is the shape of a dulled edge having a radius of preferably 0.015 inches (0.38 mm) to 0.050 inches (1.27 mm). The support structure 46 behind the fracturing tip 45 can be triangular or oval shaped. The support structure behind the fracturing tip is preferably convexed as it allows the fractured ring end surfaces to avoid being scored upon fracture of the ring. The blunt convex or triangular support to the fracturing tip prevents the fracturing tip from spreading the two fractured ring ends apart so as to allow the fracturing pin assembly to pass between said ring ends. With the preferred blunt shape supporting the fracturing tip, the fracture ring ends continue to be deflected inwardly. As the fracture ring ends 71, 72 deflect inwardly they also curl back upon themselves thus further preventing contact of the fracture ring faces with the fracturing pin 40 as shown in Figure 7. A triangular support, (not shown) can be used as an alternate embodiment to the blunt convex support, if the angle as measured from the tip is greater than 10 degrees, preferably greater than 30 degrees, and more preferably greater than 60 degrees.

In Figures 5A_{,} 5B, 8A and 8B, an alternate embodiment of the fracturing tip 145 and the support structure 146 are shown. Either of these fracturing tips and support structures can be used in either of the recessed area apparatus or methods of the present invention. A sharp "cutting" fracturing tip should be avoided since it may score, notch or etch the circumference of the ring such that undesirable leakage of the seal may result. This combination of geometry concentrates the stress to a preferred narrow zone prior to fracture using the small geometry tip and then prevents distortion of the matching fracture walls by lifting the fracture faces off the fracture pin using the wider supporting structure behind the tip. It also permits the position of the fracture to be more precisely controlled since the stress zone has been significantly narrowed in comparison to the prior art.

The amount of force required to fracture the seal ring will vary with the material characteristics and cross section of the seal ring. The rate at which the force is applied to the seal ring is also important. If the force is applied too slowly the fracture line will propagate at an angle to the radius. Additionally, slow application of the force, along with hyperextension such that the fracturing pin or other fracturing mechanism is moved too far toward the center of the seal ring, may result in deformation of the original round ring shape of the seal ring. If the seal ring is hyper extended, the local elastic limit of the material may be exceeded and the seal ring may deform. If, on the other hand, the force is applied too quickly, hyperextension may also occur resulting in deformation of the seal ring. For that reason, it is preferred that the rate of application of force to the seal ring be swift, rather than gradual and the stroke length of the fracturing pin be limited. The force may be applied by hand pressure or by controlled mechanical means. The calculation of the amount of force to be applied for given parameters as indicated above is apparent to one of ordinary skill in the art.

The seal ring is partially constrained on its circumference by the recessed pocket 20 while being inwardly deflected by the fracturing pin. A circular or angular geometry is preferred for the pocket because of its self-centering characteristic. In the angular geometry (e.g. "V" shaped recessed area), the ring will migrate to the bottom of the "V" or furthest most tangential position from the fracturing pin when displaced by the fracturing pin. One is now assured of the position of the fracture relative to some ring characteristic such as a tab or oil grove. With a round pocket, seal rings from 75% of the diameter of the round pocket up to the diameter of the pocket can be fractured without changing the pocket size. Seal rings smaller in diameter than 75% of the pocket diameter may have a tendency to nest improperly at the farthest tangential point to the fracturing pin and thus be poorly aligned. With a "V" type pocket this problem is overcome and can be a universal holder for a wide range of diameters. See seal rings 135 shown in Figures 8A and 8B and 130 shown in Figures 5A and 5B for two examples of how seal rings differing in size can be accommodated in the "V" shaped retaining pocket of the present invention.

The recessed depth of the pocket for either the circular or the "V" shape is a matter of preference in the present invention. The depth need only be sufficient to prevent the ring from "jumping" the wall of the pocket caused by seal ring chamfers, beveled edges or other ring characteristics that could initiate a lifting of the ring out of the pocket. The wall height or depth of the recessed pocket is at least one half the thickness of the seal ring. For many seal rings having an outside diameter of four (4) inches or less, the depth is at least 0.05 inches (1.27 mm) in depth and most preferably at least 0.100 inches (2.54 mm) for many applications.

The prior art of US Patent No. 5,988,649 teaches a three pin method that has a significant limitation in comparison to the present invention. For very small diameter rings, there is insufficient internal open area of the seal ring to locate the two constraining pins and still have an unsupported region for the external pin to apply a force.

Using the apparatus of the present invention, as described above, according to the method of the present invention described above, results in a seal ring having true roundness, despite the presence of the fracture line therein, which is necessary to perform the sealing function. By "true roundness" is meant the seal's ability to maintain a round form even after the seal has been fractured. In ANSI Y14.5M-1982, true roundness is further defined in that all points of the surface intersected by any plane perpendicular to a common axis are essentially equidistant from that axis. If the seal ring is "out of round" leakage will most likely occur since the outer surface of the seal ring will not make complete contact with the bore of the housing. As discussed above, machining a gap into a seal ring wherein some of the seal ring material is actually removed, results in lack of true roundness and an inability to completely close the gap when the opposing faces are brought back into contact with each other as shown in Figure 2.

Furthermore, certain physical properties are important in a seal ring. Properties of particular importance are tensile strength, modulus and elongation. Although metal seal rings tend to have better tensile strength and modulus, elongation is higher in polymers. It has been found that for rings of the present invention, tensile strength should be in the range of 9000 to 18000 psi (62.1 x 10³ to 124.1 x 10³ kPa), elongation in the range of 2.5 to 10%, and tensile modulus in the range of 310,000 to 750,000 psi (2.14 x 10⁶ to 5.17 x 10 kPa). One of ordinary skill in the art would understand that these are merely preferred ranges, but are not limiting. A wide variety of polymers are suitable for use in the seal rings fractured in the present invention. Those that are particularly suitable are polyimide, polyamide, polyester, polyetheretherketone (PEEK), polyamideimide, polyetherimide, polyphenylene sulfide, and polybenzimidazole. If the polymer is a polyimide, it is preferred that it be prepared from at least one diamine and at least one anhydride. Preferred diamines, which can be used, include m-phenylene diamine (MPD), p-phenylene diamine (PPD), oxydianiline (ODA), methylene dianiline (MDA), and toluene diamine (TDA). Preferred anhydrides, which can be used, include benzophenone tetracarboxylic dianhydride (BTDA), biphenyl dianhydride (BPDA), trimellitic anhydride (TMA), pyromellitic dianhydride (PMDA), maleic anhydride (MA), and nadic anhydride (NA).

Preferred polyimides include those prepared from the following combinations of anhydride and diamine: BTDA-MPD, MA-MDA, BTDA-MDA-NA, TMA-MPD & TMA-ODA, BPDA-ODA, BPDA-MPD, BPDA-PPD, BTDA-4, 4'-diaminobenzophenone, and BTDA-bis(P-phenoxy)-p, p'-biphenyl. An especially satisfactory polyimide useful in the seal ring of present invention is that prepared from pyrometillitic dianhydride and 4,4'-oxydianiline (PMDA-ODA).

The polyimide compositions can also contain a blend of at least one polyimide with at least one other polymer which is melt processible at a temperature of less than about 400° C and is selected from polyamide and polyester resin and may be present in a concentration of from about 45 to 79.9 weight percent. Melt processible is used in its conventional sense, that the polymer can be processed in extrusion apparatus at the indicated temperatures without substantial degradation of the polymer.

A wide variety of polyamides and/or polyesters can be used in the present invention and/or can be blended with polyimides. For example, polyamides, which can be used, include nylon 6, nylon 6,6, nylon 610 and nylon 612. Polyesters, which can be used, include polybutylene terepthalate and polyethylene terepthalate.

A fusible or melt processible polyamide or polyester can additionally be, in the form of a liquid crystal polymer (LCP). LCP's are generally polyesters, including, but not limited to polyesteramides and polyesterimdes LCP's are described by Jackson et al., for example, in US Pat. Nos. 4, 169,933, 4,242,496 and 4,238,600, as well as in "Liquid Crystal Polymers: VI Liquid Crystalline Polyesters of Substituted Hydroquinones."

The polymers of the seal rings used in the present invention can further include other additives, fillers and dry lubricants, which do not depreciate the overall characteristics of the finished seal rings, as, would be evident to those skilled in the art. For example, the incorporation of graphite into the composition can extend the range of its utility as a wear resistant material. Another beneficial additive is carbon fiber, for the purpose of reducing coefficient of thermal expansion. Various inorganic fillers are known to reduce the coefficient of friction and improve wear resistance. The filler used should not prevent the fracturing of the seal ring in the present invention.

The pocket system of the present invention is advantageous over the prior art ('649).. In the prior art three pin method, the two supporting pins must retract or the ring must be lifted onto or off of the pins. In the present invention, multiple recessed pockets can be positioned on a rotating surface. The solid blank rings can be dispensed into an empty recessed pocket, indexed to a fracturing position and then further indexed for quality analysis and packaging. An apparatus such as the present invention is: capable of very high production rates, less complicated due to fewer moving and total parts, and adapting to different ring sizes with little or no modifications.

It is therefore, apparent that there has been provided in accordance with the present invention, a method and apparatus for fracturing a sealing ring that fully satisfies the aims and advantages hereinbefore set forth. While this invention has been described in conjunction with a specific embodiment thereof, it is evident that many alternatives, modifications, and variations will be apparent to those skilled in the art. Accordingly, it is intended to embrace all such alternatives, modifications and variations that fall within the scope of the appended claims.

## Claims

1. A process for fracturing a sealing ring (30) comprising:
a. Holding said ring (30) having a circumference in a recessed member (10), restricting the outward deflection of said circumference, said ring (30) being loosely held in said recessed member (10);
b. Compressing a singular localized point on said circumference of said ring (30) inwardly with a fracturing member (40); and
c. Deflecting sharply inward, the localized point of the ring circumference, until said force overstresses said ring (30), and said fracturing member (40), in tangential contact with said circumference of said ring (30), fractures the ring (30),
**characterized in that**
said recessed member (10) comprises a retaining pocket (20) for holding said sealing ring (30) during fracturing of the sealing ring (30) by said fracturing member (40).

2. A process according to claim 1, wherein said retaining pocket (20)has a circular shape.

3. A process according to claim 1, wherein said retaining pocket (20) has an angular shape.

4. A process according to claim 3, wherein said angular shape is a "V"- shape.

5. A process according to claim 1, wherein said fracturing member (40) having two opposite ends comprises a body and a fracturing tip (45) with a support member (46) on one end of the fracturing member (40).

6. A process according to claim 5, wherein said fracturing tip (45) has a radius ranging from 0.015 inches to 0.050 inches (0.38 mm to 1.27 mm).

7. A process according to claim 5, wherein said support member (46) is triangular or oval in shape.

8. An apparatus for fracturing a sealing ring (30) comprising:
a recessed member (10) for loosely holding the sealing ring (30) having a circumference wherein outward deflection of said circumference is restricted; and
a fracturing member (40), wherein said fracturing member (40) compresses said sealing (30) ring in the recessed member (10), deflecting sharply inward said sealing ring (30) until said fracturing member (40) fractures said sealing ring (30),
**characterized in that**
said recessed member (10) comprises a retaining pocket (20) for holding said sealing ring (30) during fracturing of the sealing ring (30) by said fracturing member (40).

9. An apparatus according to claim 8, wherein said fracturing member (40) comprises a body and a fracturing tip (45) on one end of said body; said fracturing tip (45) contacting the circumference of the sealing ring (30) to fracture the sealing ring (30).

10. An apparatus according to claim 8, wherein said retaining pocket (20) has a wall height that is at least one-half the width of the circumference of said sealing ring (30).

11. An apparatus according to claim 8, wherein said retaining pocket (20) has a wall height of at least 0.05 inches (1.27 mm).

12. An apparatus according to claim 8, wherein said retaining pocket (20) has a wall height of at least 0.100 inches (2.54 mm).

13. An apparatus according to claim 8, wherein said retaining pocket (20) has a circular shape.

14. An apparatus according to claim 8, wherein said retaining pocket (20) has an angular shape.

15. An apparatus according to claim 14, wherein said angular shape is a "V"-shape.

## Patentansprüche

1. Verfahren zum Aufbrechen eines Dichtungsringes (30), das die folgenden Schritte aufweist:
a. Halten des Ringes (30), der einen Umfang aufweist, in einem ausgesparten Element (10), wodurch die Durchbiegung des Umfangs nach außen eingeschränkt wird, wobei der Ring (30) lose im ausgesparten Element (10) gehalten wird;
b. Zusammendrücken einer einzelnen lokalisierten Stelle auf dem Umfang des Ringes (30) nach innen mit einem Aufbrechelement (40); und
c. heftiges Durchbiegen der lokalisierten Stelle des Ringumfangs nach innen, bis die Kraft den Ring (30) überbeansprucht und das Aufbrechelement (40) in tangentialem Kontakt mit dem Umfang des Ringes (30) den Ring (30) aufbricht,
**dadurch gekennzeichnet, dass**
das ausgesparte Element (10) eine Haltevertiefung (20) für das Halten des Dichtungsringes (30) während des Aufbrechens des Dichtungsringes (30) mittels des Aufbrechelementes (40) aufweist.

2. Verfahren nach Anspruch 1, bei dem die Haltevertiefung (20) eine kreisförmige Form aufweist.

3. Verfahren nach Anspruch 1, bei dem die Haltevertiefung (20) eine winkelige Form aufweist.

4. Verfahren nach Anspruch 3, bei dem die winkelige Form eine "V"-Form ist.

5. Verfahren nach Anspruch 1, bei dem das Aufbrechelement (40), das zwei entgegengesetzte Enden aufweist, einen Körper und ein Aufbrechende (45) mit einem Stützelement (46) an einem Ende des Aufbrechelementes (40) aufweist.

6. Verfahren nach Anspruch 5, bei dem das Aufbrechende (45) einen Radius aufweist, der sich von 0,015 in. bis 0,050 in. (0,38 mm bis 1,27 mm) bewegt.

7. Verfahren nach Anspruch 5, bei dem das Stützelement (46) eine dreieckige oder ovale Form aufweist.

8. Vorrichtung zum Aufbrechen eines Dichtungsringes (30), die aufweist:
ein ausgespartes Element (10) für das lose Halten des Dichtungsringes (30), der einen Umfang aufweist, wobei die Durchbiegung des Umfangs nach außen eingeschränkt wird; und
ein Aufbrechelement (40), wobei das Aufbrechelement (40) den Dichtungsring (30) im ausgesparten Element (10) zusammendrückt, was den Dichtungsring (30) heftig nach innen durchbiegt, bis das Aufbrechelement (40) den Dichtungsring (30) aufbricht,
**dadurch gekennzeichnet, dass**
das ausgesparte Element (10) eine Haltevertiefung (20) für das Halten des Dichtungsringes (30) während des Aufbrechens des Dichtungsringes (30) mittels des Aufbrechelementes (40) aufweist.

9. Vorrichtung nach Anspruch 8, bei der das Aufbrechelement (40) einen Körper und ein Aufbrechende (45) an einem Ende des Körpers aufweist, wobei das Aufbrechende (45) den Umfang des Dichtungsringes (30) berührt, um den Dichtungsring (30) aufzubrechen.

10. Vorrichtung nach Anspruch 8, bei der die Haltevertiefung (20) eine Wandhöhe aufweist, die mindestens die halbe Breite des Umfangs des Dichtungsringes (30) beträgt.

11. Vorrichtung nach Anspruch 8, bei der die Haltevertiefung (20) eine Wandhöhe von mindestens 0,05 in. (1,27 mm) aufweist.

12. Vorrichtung nach Anspruch 8, bei der die Haltevertiefung (20) eine Wandhöhe von mindestens 0,100 in. (2,54 mm) aufweist.

13. Vorrichtung nach Anspruch 8, bei der die Haltevertiefung (20) eine kreisförmige Form aufweist.

14. Vorrichtung nach Anspruch 8, bei der die Haltevertiefung (20) eine winkelige Form aufweist.

15. Vorrichtung nach Anspruch 14, bei der die winkelige Form eine "V"-Form ist.

## Revendications

1. Procédé de fracturation d'une bague d'étanchéité (30), comprenant les étapes ci-dessous :
a. retenue de ladite bague (30), ayant une circonférence, dans un élément évidé (10), limitant le fléchissement vers l'extérieur de ladite circonférence, ladite bague (30) étant retenue sans serrage dans ledit élément évidé (10) ;
b. compression d'un seul point localisé sur ladite circonférence de ladite bague (30) vers l'intérieur par l'intermédiaire d'un élément de fracturation (40) ; et
c. fléchissement fort vers l'intérieur du point localisé de la circonférence de la bague, jusqu'à ce que la force entraîne une contrainte excessive de ladite bague (30), ledit élément de fracturation (40), en contact tangentiel avec ladite circonférence de ladite bague (30), fracturant la bague (30) ;
**caractérisé en ce que**
ledit élément évidé (10) comprend une poche de retenue (20) pour retenir ladite bague d'étanchéité (30) au cours de la fracturation de ladite bague d'étanchéité (30) par ledit élément de fracturation (40).

2. Procédé selon la revendication 1, dans lequel ladite poche de retenue (20) a une forme circulaire.

3. Procédé selon la revendication 1, dans lequel ladite poche de retenue (20) a une forme angulaire.

4. Procédé selon la revendication 3, dans lequel ladite forme angulaire est une forme en V.

5. Procédé selon la revendication 1, dans lequel ledit élément de fracturation (40), comportant deux extrémités opposées, comprend un corps et une pointe de fracturation (45), avec un élément de support (46) sur une extrémité de l'élément de fracturation (40).

6. Procédé selon la revendication 5, dans lequel ladite pointe de fracturation (45) a un rayon compris entre 0,015 pouce et 0,050 pouce (0,38 et 1,27 mm).

7. Procédé selon la revendication 5, dans lequel ledit élément de support (46) a une forme triangulaire ou ovale.

8. Appareil pour fracturer une bague d'étanchéité (30), comprenant :
un élément évidé (10), pour retenir sans serrage ladite bague d'étanchéité (30), ayant une circonférence, un fléchissement vers l'extérieur de ladite circonférence étant limité ; et
un élément de fracturation (40), ledit élément de fracturation (40) comprimant ladite bague d'étanchéité (30) dans l'élément évidé (10), fléchissant fortement vers l'intérieur ladite bague d'étanchéité (30) jusqu'à ce que ledit élément de fracturation (40) fracture ladite bague d'étanchéité (30) ;
**caractérisé en ce que**
ledit élément évidé (10) comprend une poche de retenue (20) pour retenir ladite bague d'étanchéité (30) au cours de la fracturation de ladite bague d'étanchéité (30) par ledit élément de fracturation (40).

9. Appareil selon la revendication 8, dans lequel ledit élément de fracturation (40) comprend un corps et une pointe de fracturation (45) sur une extrémité dudit corps, ladite pointe de fracturation (45) contactant la circonférence de la bague d'étanchéité (30) pour fracturer la bague d'étanchéité (30).

10. Appareil selon la revendication 8, dans lequel ladite poche de retenue (20) a une hauteur de paroi représentant au moins la moitié de la largeur de la circonférence de ladite bague d'étanchéité (30).

11. Appareil selon la revendication 8, dans lequel ladite poche de retenue (20) a une hauteur de paroi d'au moins 0,05 pouce (1,27 mm).

12. Appareil selon la revendication 8, dans lequel ladite poche de retenue (20) a une hauteur de paroi d'au moins 0,100 pouce (2,54 mm).

13. Appareil selon la revendication 8, dans lequel ladite poche de retenue (20) a une forme circulaire.

14. Appareil selon la revendication 8, dans lequel ladite poche de retenue (20) a une forme angulaire.

15. Appareil selon la revendication 14, dans lequel ladite forme angulaire est une forme en V.
